# EUROPÄISCHE PATENTSCHRIFT

(11) **EP 2 686 188 B1**
(45) Veröffentlichungstag und Bekanntmachung des Hinweises auf die Patenterteilung: **13.07.2016**
(21) Anmeldenummer: 12702245.7
(22) Anmeldetag: 01.02.2012
(51) Int. Cl.: B60K 7/00, B60K 17/04

(54) **ANTRIEBSVORRICHTUNG ZUM ANTREIBEN EINES RADES FÜR EIN ELEKTRISCH ANTREIBBARES FAHRZEUG**
DRIVE APPARATUS FOR DRIVING A WHEEL OF AN AXLE OF A ELECTRIC DRIVABLE VEHICLE
DISPOSITIF D'ENTRAÎNEMENT POUR L'ENTRAÎNEMENT D'UNE ROUE POUR UN VÉHICULE PROPULSABLE ÉLECTRIQUEMENT

(30) Priorität: 16.03.2011 DE 102011005616
(43) Veröffentlichungstag der Anmeldung: 22.01.2014
(73) Patentinhaber: ZF Friedrichshafen AG, 88038 Friedrichshafen (DE)
(72) Erfinder: HEIMANN, Jens, 88719 Stetten (DE); MÜNSTER, Martin, 82140 Olching (DE); POLLMEYER, Stephan, 88046 Friedrichshafen (DE); MAIR, Ulrich, 88046 Friedrichshafen (DE)
(86) Internationale Anmeldenummer: PCT/EP2012/051640
(87) Internationale Veröffentlichungsnummer: WO 2012/123175

(56) Entgegenhaltungen:
- WO-A1-2011/003489
- DE-A1- 4 134 840
- JP-A- 2001 315 534
- US-A- 5 168 946

## Beschreibung

Die vorliegende Erfindung bezieht sich auf eine Antriebsvorrichtung zum Antreiben eines Rades für ein elektrisch antreibbares Fahrzeug gemäß dem Oberbegriff des Patentanspruchs 1.

In der Regel entspricht die Anordnung des Antriebsstrangs bei elektrisch angetriebenen Fahrzeugen der Anordnung des Antriebsstrangs bei Fahrzeugen, welche einen Zentralantrieb, umfassend einen Verbrennungsmotor, aufweisen. Hierbei wird eine Antriebsvorrichtung, umfassend eine elektrische Maschine, ein Getriebe und ein Differenzial karosseriefest in der Fahrzeugmitte zwischen den Vorder- oder Hinterrädern angeordnet; das Abtriebsmoment wird wie bei konventionellen Zentralantrieben über Seitenwellen auf die angetriebenen Räder übertragen. Bei einer derartigen Anordnung des Antriebsstrangs bleibt das Fahrwerkkonzept weitestgehend erhalten, wobei lediglich Modifikationen der Aggregatelagerung und des Hilfsrahmens erforderlich sind.

Bei elektrisch angetriebenen bzw. antreibbaren Fahrzeugen, umfassend einen Zentralantrieb stellt die Batterieunterbringung einen erheblichen Eingriff in die Fahrzeugstruktur dar. Hierbei ist bekannt, die Batterie in den Unterboden, beispielsweise unter der Rücksitzbank oder im Bereich, der bei Zentralantrieben mit einem Verbrennungsmotor vom Getriebetunnel eingenommen wurde, zu integrieren.

Auch sind im Stand der Technik radnahe elektrische Antriebe bekannt, wobei unter radnahen Antrieben im weiteren Antriebe verstanden werden, welche pro Antriebsrad des Fahrzeugs ein oder mehrere Elektromotoren vorsehen. So sind Fahrzeuge mit zwei oder mehreren Antriebsrädern bekannt, die eine entsprechende Anzahl an Antrieben, also zwei oder mehrere, aufweisen. Dabei kann jeweils ein Elektromotor auf genau ein Antriebsrad wirken.

Des Weiteren sind aus dem Stand der Technik radnahe elektrische Antriebe zum Antreiben eines Antriebrades für elektrisch antreibbare Fahrzeuge bekannt, die in das Fahrwerk des Fahrzeugs integriert sind, wobei in Abhängigkeit von der Anzahl der angetriebenen Fahrzeugräder beispielsweise zwei oder vier elektrische Antriebe vorgesehen sind.

Hierbei können die elektrischen Antriebe radträgerfest angeordnet sein; in diesem Fall federt der elektrische Antrieb unmittelbar mit dem jeweiligen Rad mit und die ungefederte Masse wird durch den Antrieb direkt beeinflusst.

Eine weitere Möglichkeit der Anordnung der radnahen elektrischen Antriebe besteht darin, diese aufbaufest anzuordnen. Hierbei rücken die elektrischen Antriebe aus der Fahrzeugmitte heraus hin zu den Rädern. Die Antriebe sind aber weiterhin am Fahrzeugaufbau befestigt und beeinflussen deshalb die ungefederten Massen nicht.

Ferner können die elektrischen Antriebe lenkerfest angeordnet sein, wobei sie in diesem Fall an den Fahrwerkslenkern, beispielsweise am Verbundlenker befestigt sind. Durch diese Konzeption wird die ungefederte Masse reduziert, indem die elektrischen Antriebe nahe am aufbaufesten Lenkeranbindungspunkt angeordnet werden.

Aus der DE 10 2007 039 059 A1 der Anmelderin ist eine als Verbundlenkerachse ausgeführte angetriebene Fahrzeugachse bekannt, bei der für jedes Rad der Achse ein Elektromotor vorgesehen ist, welcher mit der Drehachse in Fahrzeuglängsrichtung angeordnet ist, wobei dessen Gehäuse einen Teil der Längsschwinge der Verbundlenkerachse darstellt.

Radnahe Antriebe können bei Fahrzeugen mit Allrad-, Front-, oder Heckantrieb vorgesehen sein, wobei die Achstypen der angetriebenen Fahrzeugachsen konventionelle Achstypen, wie z.B. Federbein- oder Doppelquerlenkerachstypen sein können. Ferner können radnahe Antriebe in radintegrierten Fahrwerke integriert sein.

Des Weiteren können die radnahen elektrischen Antriebe ein Getriebe aufweisen.

Aus der WO 2008/017945 A1 ist eine in ein Fahrzeugrad integrierbare Antriebsvorrichtung zum Antreiben des Rades bekannt, welche einen Elektromotor und eine Getriebeeinheit aufweist, wobei die Getriebeeinheit ein Stirnradgetriebe und ein Planetengetriebe aufweist, die in Reihe geschaltet sind. Hierbei ist das Planetengetriebe in Kraftflussrichtung im Zugbetrieb betrachtet abtriebsseitig des Stirnradgetriebes angeordnet.

In vorteilhafter Weise resultiert die Verwendung von radnahen elektrischen Antrieben zum Antreiben eines Rades einer angetriebenen Achse beim Fahrzeugaufbau in einer hohen Flexibilität, da sich durch den Entfall des zentralen Antriebs in der Fahrzeugmitte neue Freiheitsgrade bei der Fahrzeuggestaltung, insbesondere bei der Gestaltung des Fahrzeuginnenraums, der Batterieunterbringung und der Crash-Sicherheit ergeben.

Zudem können durch radnahe elektrische Antriebe radindividuelle Antriebsmomente erzeugt werden, wodurch Funktionen wie Torque-Vectoring, ESP, ABS, ASR etc. auf einfache Weise realisiert werden können. Durch die schnelle und genauere Regelbarkeit von elektrischen Antrieben können diese Funktionen im Vergleich zu herkömmlichen bremsenbasierten Regelsystemen optimiert werden.

Aus JP 2001 315534 geht eine Vorrichtung nach dem Oberbegriff des Anspruchs 1 hervor. Der vorliegenden Erfindung liegt die Aufgabe zugrunde, eine Antriebsvorrichtung zum Antreiben eines Rades für ein elektrisch antreibbares Fahrzeug anzugeben.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird eine Antriebsvorrichtung zum Antreiben eines Rades einer Verbundlenkerachse für ein elektrisch antreibbares Fahrzeug vorgeschlagen, umfassend eine elektrische Maschine und eine Getriebeeinheit, wobei die Getriebeeinheit ein Stirnradgetriebe und ein Planetengetriebe aufweist, die in Kraftflussrichtung im Zugbetrieb betrachtet abtriebsseitig der elektrischen Maschine in der Reihenfolge Planetengetriebe - Stirnradgetriebe angeordnet sind.

Das Planetengetriebe ist koaxial zum Rotor der elektrischen Maschine angeordnet, wobei das Stirnradgetriebe achsparallel zum Rotor der elektrischen Maschine angeordnet ist. Die Antriebsvorrichtung ist achsparallel zur Radachse angeordnet.

Der durch diese Konzeption entstehende Achsversatz wird genutzt, um den Abstand zwischen dem Schwerpunkt der Antriebsvorrichtung und dem Drehpunkt, um den sich die Radachse relativ zum Fahrzeugaufbau räumlich bewegt, zu verkleinern, was wiederum zu einer Reduzierung der ungefederte Masse führt. Vorzugsweise ist die Antriebsvorrichtung zwischen der Radmitte und dem Drehpunkt, im Drehpunkt oder an der der Radmitte abgewandte Seite des Drehpunktes angeordnet sein.

Durch die Kombination eines Planetengetriebes mit einem Stirnradgetriebe wird eine große Übersetzung ermöglicht, wobei die Abmessungen sowie das Gewicht der elektrischen Maschine und somit die ungefederte Masse gering gehalten werden können; beispielsweise kann die durch die zwei Getriebe erzielbare Übersetzung einen Wert annehmen, der größer als 10 ist. Vorzugsweise nimmt die Übersetzung, also das Verhältnis zwischen der Umdrehungsgeschwindigkeit der Antriebswelle des Getriebes zur Umdrehungsgeschwindigkeit der Abtriebswelle des Getriebes einen Wert größer als 10, bevorzugt zwischen 13 und 18, insbesondere den Wert 16 an. Hierbei kann die Aufteilung der erzielbaren Übersetzung auf die Getriebe symmetrisch oder asymmetrisch erfolgen.

In vorteilhafter Weise ergibt die Kombination eines niedrigen Antriebsmomentes mit einer hohen Drehzahlausnutzung in Summe in Verbindung mit den zwei Getrieben der Antriebsvorrichtung ein hohes Leistungs-/Gewichtsverhältnis (kW/kg). Die elektrische Maschine kann dadurch klein dimensioniert sein, was in vorteilhafter Weise die Integration der elektrischen Maschine in den Längslenker ermöglicht bzw. vereinfacht.

Auch ermöglicht die Verwendung eines Stirnrades ein Versatz zwischen der Abtriebswelle der elektrischen Maschine und der Radachse, wodurch die elektrische Maschine auf dem Längslenker weiter in Richtung des Verbindungspunktes des Längslenkers mit der Karosserie gerückt werden kann und so die ungefederten Massen verringert werden.

Durch das Positionieren des eher flach bauenden Stirnrades in Kraftrichtung nach dem Planetenradgetriebe, ermöglicht es, die Position der Feder und des Dämpfers in der Nähe des Radmittelpunktes beizubehalten und so ein gutes Ansprech- und Abstimmverhalten zu ermöglichen.

In Verwendung der Getriebe mit einem hochdrehenden Elektromotor, wie einer Maschine mit einer maximalen Umdrehungsgeschwindigkeit von mehr als 15000 Umdrehungen /min, bevorzugt zwischen 18 000 und 22 000 Umdrehungen pro Minute, insbesondere 21 000 Umdrehungen pro Minute, erlaubt es die Positionierung des Planetengetriebes unmittelbar nachgeschaltet zur elektrischen Maschine einen weniger geräuschvollen Betrieb, als bei der Verwendung eines Stirnrades in der selben Position, da das Planetengetriebe in der Regel kompakter gebaut ist und so die schallabstrahlenden Gehäuseflächen im Bereich der hochdrehenden Getriebestufe verkleinert werden.

Ein Gehäuse der Antriebsvorrichtung kann als Radträger, als radfester Lenker oder als Teil des Radträgers dienen und auftretende Kräfte in das Fahrwerk einleiten.

Vorzugsweise ist die Anordnung der elektrischen Maschine und der Getriebeeinheit derart, dass in der überwiegenden Betriebslage des Fahrzeugs der Schmierstoff selbsttätig unter Einwirkung der Schwerkraft aus der elektrischen Maschine in den Ölsumpf im Getrieberaum zurückfließt, wobei zu diesem Zweck das Gehäuse der elektrischen Maschine derart ausgestaltet ist, dass eine ausreichende Schmierung der Lager der Rotorwelle gewährleistet ist. Dies resultiert in dem Vorteil, dass die Notwendigkeit des Vorsehens berührender oder nicht berührender Dichtungen, insbesondere bei schnelldrehenden Wellen der Antriebsvorrichtung entfällt, wodurch Schmierstoffverluste und Wärmeentwicklung reduziert werden.

Im Rahmen der Erfindung wird vorgeschlagen, ein Gehäuse der Antriebsvorrichtung direkt mit dem Längslenker der Verbundlenkerachse zu verbinden, beispielsweise zu verschrauben, als mehrteiliges Schweißbauteil in den Längslenker zu integrieren oder mit dem Längslenker einteilig auszuführen.

Im Rahmen einer weiteren Ausgestaltung können die elektrische Maschine und das Planetengetriebe ein gemeinsames Gehäuse aufweisen.

Zudem können die Anbindung des Bremssattels für den Fall einer Scheibenbremse und/oder des Dämpfers und/oder der Feder in ein Gehäuse der Antriebsvorrichtung integriert sein, wobei die Verbindungsschrauben zur Fixierung des Bremssattels gleichzeitig Gehäuseschrauben für die Befestigung der Antriebsvorrichtung am Längslenker der Achse darstellen können.

Auf diese Weise wird eine kompakte Bauweise erzielt und es entfällt die Notwendigkeit separater Bauteile, was in einer Reduzierung der Kosten resultiert.

Die Antriebsvorrichtung kann insbesondere mit einer Verbundlenker, Zentrallenker-, Schräglenker- oder Längslenkerachse kombiniert werden. Dabei wird unter einer Verbundlenkerachse unter Anderem eine Achse mit zwei Längslenkern und einem diese verbindenden Querträger verstanden. Unter einer Zentrallenkerachse wird eine Achse mit zwei Längslenkern verstanden, wobei jeder Längslenker mit zwei Querlenkern verbunden ist, die an der Karosserie befestigt sind. Eine Schräglenkerachse umfasst pro Rad eine in etwa dreieckige Schwinge, welche an den zwei Enden mit der Karosserie und am Scheitel mit dem Radträger verbunden ist. Eine Längslenkerachse ist eine Achse, welche pro Rad einen Längslenker vorsieht, der einerseits mit der Karosserie und andererseits mit dem Rad verbunden ist.

Die Erfindung wird im Folgenden anhand der beigefügten Figuren beispielhaft näher erläutert, wobei für gleiche Bauteile dieselben Bezugszeichen verwendet werden. Es zeigen:
- Figur 1:: Eine schematische Draufsicht einer nach dem Stand der Technik ausgeführten Verbundlenker-Hinterachse;
- Figur 2:: Eine schematische Schnittansicht einer ersten Ausführungsform einer erfindungsgemäßen Antriebsvorrichtung für ein elektrisch antreibbares Fahrzeug und der Anordnung der Antriebsvorrichtung; und
- Figur 3:: Eine perspektivische Ansicht der Anordnung einer erfindungsgemäßen Antriebsvorrichtung.

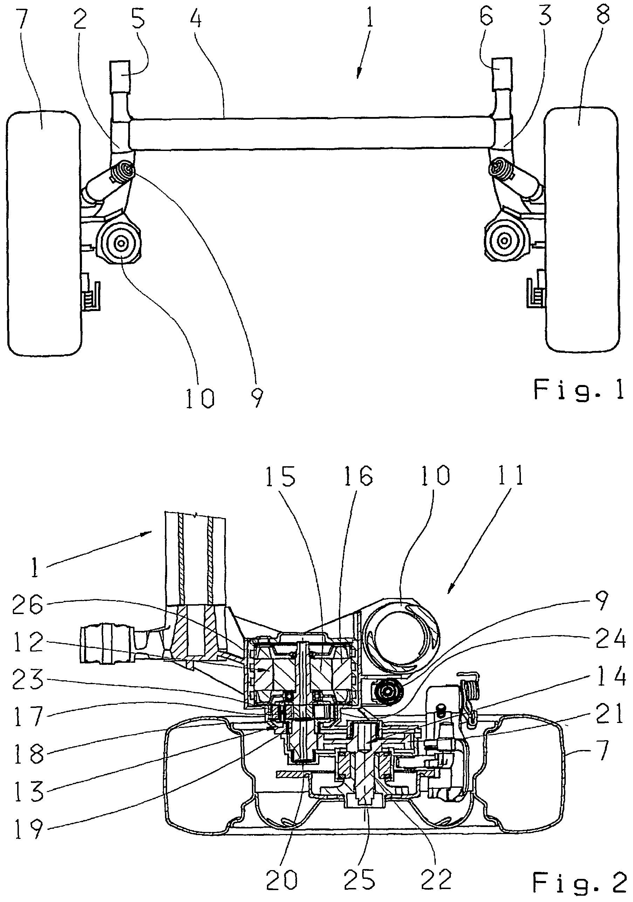

Bezugnehmend auf Figur 1 umfasst eine nach dem Stand der Technik ausgeführte Verbundlenker-Hinterachse 1 zwei Längslenker 2, 3, welche durch ein Querprofil 4 miteinander verbunden sind.

Die Verbundlenker-Hinterachse 1 ist durch zwei Gummilager 5, 6 mit der Karosserie des Fahrzeugs verschraubt. Die Räder der Verbundlenker-Hinterachse 1 sind in der Figur mit den Bezugszeichen 7 bzw. 8 versehen. Ferner sind in der beigefügten Figur 1 mit 9 ein Dämpfer und mit 10 eine Feder der Achse 1 bezeichnet.

Bei der in Figur 2 gezeigten Ausführungsform der Erfindung ist eine Antriebsvorrichtung 11 zum Antreiben eines Rades 7 einer Verbundlenkerachse 1 eines elektrisch antreibbaren Fahrzeugs dargestellt, welche eine elektrische Maschine 12 und eine Getriebeeinheit, umfassend ein Stirnradgetriebe 14 und ein Planetengetriebe 13 aufweist, die in Kraftflussrichtung im Zugbetrieb betrachtet abtriebsseitig der elektrischen Maschine 12 in der Reihenfolge Planetengetriebe 13 - Stirnradgetriebe 14 angeordnet sind. Das Planetengetriebe 13 und das Stirnradgetriebe 14 sind bei dem gezeigten Beispiel axial betrachtet an der dem Rad 7 zugewandten Seite der elektrischen Maschine 12 angeordnet.

Bei dem gezeigten Beispiel ist der Rotor 15 der als Innenläufer ausgeführten elektrischen Maschine 12 über eine Sonnenradwelle mit dem Sonnenrad 17 des Planetengetriebes 13 verbunden, wobei der Steg 18 des Planetengetriebes 13 über eine Stegwelle 19 mit dem Ritzel 20 (d.h. mit dem kleinen Zahnrad) des Stirnradgetriebes 14 verbunden ist, welches mit dem Stirnrad 21 (d.h. mit dem großen Zahnrad) kämmt. Das Stirnrad 21 ist mit der Radnabe 22 des Rades 7 vorzugsweise mittels einer steckbaren Keilwellenverbindung oder eines Polygonprofils verbunden oder mit der Radnabe 22 einteilig ausgeführt, wodurch die Montage- und Herstellungskosten reduziert werden. Die Verbindung zwischen der Stegwelle 19 und dem Ritzel 20 ist vorzugsweise axial und radial durch Wälzlager, Gleitlager oder Anlaufscheiben abgestützt. In Figur 2 ist der Stator der elektrischen Maschine mit dem Bezugszeichen 16 versehen.

Des Weiteren ist das Hohlrad 23 des Planetengetriebes 13 gehäusefest angeordnet; es kann an das Gehäuse 24 des Planetengetriebes 13 gekoppelt, einstückig mit dem Gehäuse 24 ausgeführt oder in das Gehäuse 24 eingepresst sein. Für den Fall, dass das Hohlrad 23 einstückig mit dem Gehäuse 24 ausgeführt ist, kann ein radialer Absatz vorgesehen sein, um den Durchmesserunterschied zwischen dem Gehäuse 24 und dem Hohlrad 23 auszugleichen. Durch die Ausgestaltung des Hohlrades 23 als in ein zylindrisches Gehäuse einpressbarer Hohlradring kann in Abhängigkeit der Belastung der Werkstoff gewählt werden, wobei dies in einer Reduzierung des Gewichts resultieren kann.

Das Planetengetriebe 13 und die elektrische Maschine 12 können im Rahmen einer Weiterbildung ein gemeinsames Gehäuse aufweisen. Bei dem in Figur 2 gezeigten Beispiel ist das Gehäuse der elektrischen Maschine 12 mit dem Bezugszeichen 26 versehen.

Ferner kann die Rotorwelle 15 der elektrischen Maschine 12 einstückig mit der Sonnenradwelle ausgeführt sein; die Stegwelle 19 kann zudem einstückig mit dem Ritzel 20 ausgeführt sein.

Im Rahmen weiterer, nicht dargestellter Ausführungsformen können der Antrieb und/oder der Abtrieb des Planetengetriebes 13 über ein weiteres Element des Planetengetriebes erfolgen.

Die Verzahnungen sind vorzugsweise schrägverzahnt ausgeführt, wobei die Lagerung der Sonnenradwelle des Planetengetriebes 13 durch die antriebsseitige Lagerung des Rotors 15 der elektrischen Maschine 12 gebildet wird, so dass die Notwendigkeit separater Lager entfällt, wobei die dem Sonnenrad 17 des Planetengetriebes 13 abgewandte Lagerung des Rotors 15 der elektrischen Maschine 12 vorzugsweise durch ein Federelement axial vorgespannt sein kann.

Hierbei ist der Schrägungswinkel des Sonnenrades 17 des Planetengetriebes 13 vorzugsweise entgegengesetzt zum Schrägungswinkel des Ritzels 20 des Stirnradgetriebes 14. Zudem sind in vorteilhafter Weise die Richtungen der Schrägungswinkel des Sonnenrades 17 des Planetengetriebes 13 und des Ritzels 20 des Stirnradgetriebes 14 so zu wählen, dass die Belastungen auf die Lager der Antriebsvorrichtung 11 minimiert werden. Dadurch werden die Reibungsverluste minimiert und es wird eine kleinere Dimensionierung der Lager ermöglicht. In vorteilhafter Weise können Höhe und Vorzeichen des Schrägungswinkels des Stirnrades 16 derart gewählt werden, dass die Lasten durch ein herkömmliches Radlager aufgenommen werden können.

Ferner wird die Lagerung des Abtriebs 25 der Antriebsvorrichtung 11, d.h. einer mit dem Stirnrad 21 verbundenen Welle 25, durch das Radlager des Rades 7 gebildet, welches als Lager üblicher Bauart, beispielsweise als zweireihiges Rollenlager oder als Lager umfassend zwei Einzelschrägrollenlager mit einem Druckwinkel zwischen 15° und 60 ° ausgeführt sein kann. Dadurch kann in vorteilhafter Weise die Lageranzahl der Antriebsvorrichtung reduziert werden.

Erfindungsgemäß ist ein Gehäuse der Antriebsvorrichtung 11, insbesondere für den Fall einer Ausführung gemäß Figur 2 das Gehäuse 26 der elektrischen Maschine 12 direkt mit dem Längslenker 2 der Verbundlenkerachse 1 verbunden, vorzugsweise verschraubt. Alternativ kann das Gehäuse 26 der elektrischen Maschine 12 als mehrteiliges Schweißbauteil in den Längslenker 2 integriert werden oder mit dem Längslenker 2 einteilig ausgeführt sein. Ferner kann die elektrische Maschine 12 wie eine Patrone in den Längslenker 2 eingefügt werden, der in diesem Fall als Gesamtgehäuse dient.

Im Rahmen einer Weiterbildung der Erfindung sind die Anbindung des Bremssattels für den Fall einer Scheibenbremse und/oder des Dämpfers 9 und/oder der Feder 10 in ein Gehäuse der Antriebsvorrichtung 11, insbesondere für den Fall einer Ausführung gemäß Figur 2 in das Gehäuse 26 der elektrischen Maschine 12 integriert, wobei die Verbindungsschrauben zur Fixierung des Bremssattels gleichzeitig Gehäuseschrauben für die Befestigung der Antriebsvorrichtung 11 am Längslenker 2 der Achse darstellen können.

Auf diese Weise wird eine kompakte Bauweise erzielt und es entfällt die Notwendigkeit separater Bauteile, was in einer Reduzierung der Kosten resultiert.

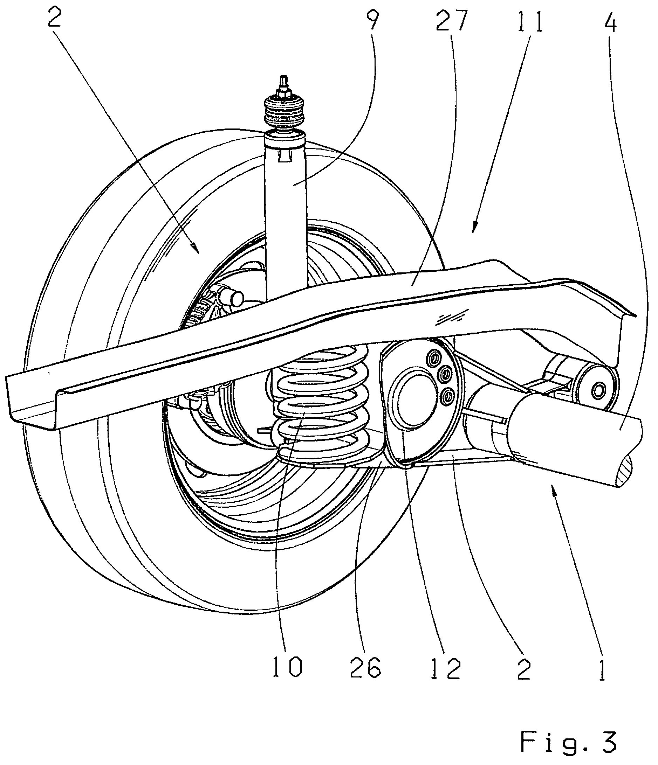

In Figur 3 wird beispielhaft die Integration der Anbindung des Dämpfers 9 und der Feder 10 in das Gehäuse 26 der elektrischen Maschine 12 sowie die direkte Verbindung des Gehäuses 26 der elektrischen Maschine 12 mit dem Längslenker 2 veranschaulicht.

Im Rahmen einer nicht dargestellten Ausführungsform der Erfindung, kann die elektrische Maschine 12 als Hohlwellenmotor, d.h. als Innenläufer mit einem als Hohlwelle ausgeführten Rotor 15 ausgeführt sein, wobei das Planetengetriebe 13 an der dem Rad 7 abgewandten Seite der elektrischen Maschine 12 angeordnet ist, das Stirnradgetriebe 14 an der dem Rad 7 zugewandten Seite der elektrischen Maschine 12 angeordnet ist und die Stegwelle 19 des Planetengetriebes 13 durch den Hohlraum des Rotors 15 der elektrischen Maschine 12 zum Ritzel 20 des Stirnradgetriebes 14 geführt wird. Bei einer derartigen Ausführungsform kann beispielsweise das Gehäuse 24 des Planetengetriebes 13 direkt mit dem Längslenker 2 der Verbundlenkerachse 1 verbunden sein.

Durch die Vertauschung der Anordnung der elektrischen Maschine 12 und des Planetengetriebes 13 im Vergleich zu dem Ausführungsbeispiel nach Figur 2 wird der Vorteil erzielt, dass im Bereich des Karosserielängsträgers Bauraum zur Verfügung gestellt wird, der beim Einfedern genutzt wird, da das Gehäuse 24 des Planetengetriebes 13 mit kleinerem Außendurchmesser ausführbar ist als das Gehäuse 26 der elektrischen Maschine 12.

Die elektrische Maschine 12 der Antriebsvorrichtung 11 kann als Asynchronmaschine, als fremderregt- oder permanentmagnet-erregte Synchronmaschine oder als Querfeldmaschine ausgeführt werden, was eine hohe Flexibilität bietet.

Durch die erfindungsgemäße Konzeption kann bei einer geringen ungefederten Masse und hohem Leistungs-/Gewichtsverhältnis (kW/kg) eine sehr kompakte Bauweise der Antriebsvorrichtung realisiert werden.

Die hier vorgestellte Antriebsvorrichtung kann auch mit beliebigen Achstypen, beispielsweise mit einer Zentrallenker-, Schwertlenker-, Längslenker, Schräglenker oder Trapezlenkerachse kombiniert werden.

Des Weiteren weist die Antriebsvorrichtung eine geringe Lageranzahl und eine gute Zugänglichkeit auf, wobei sie mit geringer Modifikation einer bestehenden Fahrzeugachse in die Achse integriert werden kann. Beispielsweise muss für den Fall einer Verbundlenkerachse lediglich der Längslenker durch ein modifiziertes Teil ersetzt werden.

Ferner kann die Bremsvorrichtung der Räder als Scheibenbremse oder Trommelbremse ausgeführt sein; die Antriebsvorrichtung kann luftgekühlt oder fluidgekühlt ausgeführt sein, wobei die elektrische Maschine, die Planetengetriebe und die Leistungselektronik eine gemeinsame Kühlung aufweisen können. Die Leistungselektronik kann zudem radträgerfest oder motorfest angeordnet sein.

Die Feder 10 ist weiter an dem Längsträger der Karosserie 27 befestigt.

### Bezugszeichen

- 1: Verbundlenker-Hinterachse
- 2: Längslenker
- 3: Längslenker
- 4: Querprofil
- 5: Gummilager
- 6: Gummilager
- 7: Rad
- 8: Rad
- 9: Dämpfer
- 10: Feder
- 11: Antriebsvorrichtung
- 12: elektrische Maschine
- 13: Planetengetriebe
- 14: Stirnradgetriebe
- 15: Rotor
- 16: Stator
- 17: Sonnenrad des Planetengetriebes 13
- 18: Steg des Planetengetriebes 13
- 19: Stegwelle
- 20: Ritzel
- 21: Stirnrad
- 22: Radnabe
- 23: Hohlrad 23 des Planetengetriebes 13
- 24: Gehäuse 24 des Planetengetriebes 13
- 25: Abtrieb der Antriebsvorrichtung 11
- 26: Gehäuse der elektrischen Maschine 12
- 27: Längsträger der Karosserie

## Patentansprüche

1. Antriebsvorrichtung (11) zum Antreiben eines Rades (7) für ein elektrisch antreibbares Fahrzeug, umfassend eine elektrische Maschine (12) und eine Getriebeeinheit, wobei die Getriebeeinheit ein Stirnradgetriebe (14) und ein Planetengetriebe (13) aufweist, die in Kraftflussrichtung im Zugbetrieb betrachtet abtriebsseitig der elektrischen Maschine (12) in der Reihenfolge Planetengetriebe (13) - Stirnradgetriebe (14) angeordnet sind, wobei der Rotor (15) der als Innenläufer ausgeführten elektrischen Maschine (12) über eine Sonnenradwelle mit dem Sonnenrad (17) des Planetengetriebes (13) verbunden ist, wobei der Steg (18) des Planetengetriebes (13) über eine Stegwelle (19) mit dem Ritzel (20) des Stirnradgetriebes (14) verbunden ist, welches mit dem Stirnrad (21) kämmt, welches mit der Radnabe (22) des Rades (7) verbunden oder mit der Radnabe (22) einteilig ausgeführt ist, wobei das Hohlrad (23) des Planetengetriebes (13) gehäusefest angeordnet ist, und wobei die Lagerung des Abtriebs (25) der Antriebsvorrichtung (11) durch das Radlager des Rades (7) gebildet wird, **dadurch gekennzeichnet, dass** ein Gehäuse (24, 26) der Antriebsvorrichtung (11) direkt mit einem Längslenker (2) einer Verbundlenkerachse (1) verbunden ist.

2. Antriebsvorrichtung (11) zum Antreiben eines Rades (7) für ein elektrisch antreibbares Fahrzeug, nach Anspruch 1, **dadurch gekennzeichnet, dass** der Rotor (15) der elektrischen Maschine (12) einstückig mit der Sonnenradwelle ausgeführt ist und/oder dass die Stegwelle (19) einstückig mit dem Ritzel (20) ausgeführt ist.

3. Antriebsvorrichtung (11) zum Antreiben eines Rades (7) für ein elektrisch antreibbares Fahrzeug, nach Anspruch 1 oder 2, **dadurch gekennzeichnet, dass** das Planetengetriebe (13) und das Stirnradgetriebe (14) axial betrachtet an der dem Rad (7) zugewandten Seite der elektrischen Maschine (12) angeordnet sind.

4. Antriebsvorrichtung (11) zum Antreiben eines Rades (7) für ein elektrisch antreibbares Fahrzeug, nach Anspruch 1 oder 2, **dadurch gekennzeichnet, dass** das Planetengetriebe (13) an der dem Rad (7) abgewandten Seite der elektrischen Maschine (12) angeordnet ist und dass das Stirnradgetriebe (14) an der dem Rad (7) zugewandten Seite der elektrischen Maschine (12) angeordnet ist, wobei die elektrische Maschine (12) als Innenläufer mit einem als Hohlwelle ausgeführten Rotor (15) ausgeführt ist und die Stegwelle (19) des Planetengetriebes (13) durch den Hohlraum des Rotors (15) der elektrischen Maschine (12) zum Ritzel (20) des Stirnradgetriebes (14) geführt wird.

5. Antriebsvorrichtung (11) zum Antreiben eines Rades (7) für ein elektrisch antreibbares Fahrzeug, nach einem der vorangehenden Ansprüche, **dadurch gekennzeichnet, dass** das Gehäuse (24, 26) mit dem Längslenker verschraubt, als mehrteiliges Schweißbauteil in den Längslenker (2) integriert oder mit dem Längslenker (2) einteilig ausgeführt ist.

6. Antriebsvorrichtung (11) zum Antreiben eines Rades (7) für ein elektrisch antreibbares Fahrzeug, nach einem der vorangehenden Ansprüche, **dadurch gekennzeichnet, dass** die Anbindung des Bremssattels für den Fall einer Scheibenbremse und/oder des Dämpfers (9) und/oder der Feder (10) in ein Gehäuse (24, 26) der Antriebsvorrichtung (11) integriert sind.

7. Antriebsvorrichtung (11) zum Antreiben eines Rades (7) für ein elektrisch antreibbares Fahrzeug, nach Anspruch 6, **dadurch gekennzeichnet, dass** die Verbindungsschrauben zur Fixierung des Bremssattels gleichzeitig Gehäuseschrauben für die Befestigung der Antriebsvorrichtung (11) am Längslenker (2) der Verbundlenkerachse (1) darstellen.

8. Antriebsvorrichtung (11) zum Antreiben eines Rades für ein elektrisch antreibbares Fahrzeug, nach mindestens einem der vorhergehenden Ansprüche, **dadurch gekennzeichnet, dass** die Antriebsvorrichtung (1) an einem Längslenker einer Achse, wie einer Verbundlenkerachse, einer Längslenkerachse, einer Zentrallenkerachse, einer Schräglenkerachse, angeordnet ist.

9. Antriebsvorrichtung (11) zum Antreiben eines Rades für ein elektrisch antreibbares Fahrzeug, nach Anspruch 8, **dadurch gekennzeichnet, dass** die Antriebsvorrichtung (1) zwischen einem Anlagepunkt des Rades an dem Längslenker und einem Anlagepunkt des Längslenkers an dem Aufbau des Fahrzeugs oder einem Hilfsrahmen angeordnet ist.

10. Antriebsvorrichtung (11) zum Antreiben eines Rades für ein elektrisch antreibbares Fahrzeug, nach mindestens einem der vorhergehenden Ansprüche, **dadurch gekennzeichnet, dass** das Verhältnis zwischen der Umdrehungsgeschwindigkeit der Antriebswelle zu der Umdrehungsgeschwindigkeit der Abtriebswelle des Getriebes größer als 10 ist, bevorzugt zwischen 13 und 18 und insbesondere um 16 ist.

11. Antriebsvorrichtung (11) zum Antreiben eines Rades für ein elektrisch antreibbares Fahrzeug, nach mindestens einem der vorhergehenden Ansprüche, **dadurch gekennzeichnet, dass** die elektrische Maschine eine maximale Umdrehungsgeschwindigkeit von mehr als 15 000 Umdrehungen in der Minute aufweist, bevorzugt zwischen 18000 und 25 000 Umdrehungen pro Minute, insbesondere um die 21 000 Umdrehungen pro Minute aufweist.

## Claims

1. Drive apparatus (11) for driving a wheel (7) for an electrically drivable vehicle, comprising an electric machine (12) and a transmission unit, the transmission unit having a spur gear mechanism (14) and a planetary gear mechanism (13) which are arranged on the output side of the electric machine (12) in the sequence planetary gear mechanism (13) - spur gear mechanism (14) as viewed in the power flow direction in traction mode, the rotor (15) of the electric machine (12) which is configured as an internal rotor motor being connected via a sun gear shaft to the sun gear (17) of the planetary gear mechanism (13), the spider (18) of the planetary gear mechanism (13) being connected via a spider shaft (19) to the pinion (20) of the spur gear mechanism (14), which pinion (20) meshes with the spur gear (21) which is connected to the wheel hub (22) of the wheel (7) or is configured in one piece with the wheel hub (22), the internal gear (23) of the planetary gear mechanism (13) being arranged fixedly on the housing, and the mounting of the output (25) of the drive apparatus (11) being formed by the wheel bearing of the wheel (7), **characterized in that** a housing (24, 26) of the drive apparatus (11) is connected directly to a trailing arm (2) of a torsion beam axle (1).

2. Drive apparatus (11) for driving a wheel (7) for an electrically drivable vehicle, according to Claim 1, **characterized in that** the rotor (15) of the electric machine (12) is configured in one piece with the sun gear shaft, and/or **in that** the spider shaft (19) is configured in one piece with the pinion (20).

3. Drive apparatus (11) for driving a wheel (7) for an electrically drivable vehicle, according to Claim 1 or 2, **characterized in that** the planetary gear mechanism (13) and the spur gear mechanism (14) are arranged on that side of the electric machine (12) which faces the wheel (7) as viewed axially.

4. Drive apparatus (11) for driving a wheel (7) for an electrically drivable vehicle, according to Claim 1 or 2, **characterized in that** the planetary gear mechanism (13) is arranged on that side of the electric machine (12) which faces away from the wheel (7), and **in that** the spur gear mechanism (14) is arranged on that side of the electric machine (12) which faces the wheel (7), the electric machine (12) being configured as an internal rotor motor with a rotor (15) which is configured as a hollow shaft, and the spider shaft (19) of the planetary gear mechanism (13) being guided through the hollow space of the rotor (15) of the electric machine (12) to the pinion (20) of the spur gear mechanism (14).

5. Drive apparatus (11) for driving a wheel (7) for an electrically drivable vehicle, according to one of the preceding claims, **characterized in that** the housing (24, 26) is screwed to the trailing arm, is integrated into the trailing arm (2) as a multiple-piece welded component, or is configured in one piece with the trailing arm (2).

6. Drive apparatus (11) for driving a wheel (7) for an electrically drivable vehicle, according to one of the preceding claims, **characterized in that** the attachments of the brake calliper for the case of a disc brake and/or the damper (9) and/or the spring (10) are integrated into a housing (24, 26) of the drive apparatus (11).

7. Drive apparatus (11) for driving a wheel (7) for an electrically drivable vehicle, according to Claim 6, **characterized in that** the connecting bolts for fixing the brake calliper at the same time represent housing bolts for fastening the drive apparatus (11) to the trailing arm (2) of the torsion beam axle (1).

8. Drive apparatus (11) for driving a wheel for an electrically drivable vehicle, according to at least one of the preceding claims, **characterized in that** the drive apparatus (1) is arranged on a trailing arm of an axle, such as a torsion beam axle, a trailing link axle, a central link axle or a semi-trailing link axle.

9. Drive apparatus (11) for driving a wheel for an electrically drivable vehicle, according to Claim 8, **characterized in that** the drive apparatus (1) is arranged between a bearing point of the wheel on the trailing arm and a bearing point of the trailing arm on the body of the vehicle or a subframe.

10. Drive apparatus (11) for driving a wheel for an electrically drivable vehicle, according to at least one of the preceding claims, **characterized in that** the ratio between the rotational speed of the drive shaft and the rotational speed of the output shaft of the transmission is greater than 10, is preferably between 13 and 18, and is, in particular, 16.

11. Drive apparatus (11) for driving a wheel for an electrically drivable vehicle, according to at least one of the preceding claims, **characterized in that** the electric machine has a maximum rotational speed of more than 15 000 revolutions per minute, preferably between 18 000 to 20 500 revolutions per minute, in particular about 21 000 revolutions per minute.

## Revendications

1. Dispositif d'entraînement (11) pour l'entraînement d'une roue (7) pour un véhicule pouvant être entraîné électriquement, comprenant une machine électrique (12) et une unité de transmission, l'unité de transmission présentant un engrenage à pignons droits (14) et un engrenage planétaire (13), lesquels sont disposés dans la direction du flux de forces, considéré en mode de traction, du côté de la prise de force de la machine électrique (12) dans la succession engrenage planétaire (13) - engrenage à pignons droits (14), le rotor (15) de la machine électrique (12) réalisée en tant que rotor interne étant connecté par le biais d'un arbre de roue solaire à la roue solaire (17) de l'engrenage planétaire (13), le porte-satellites (18) de l'engrenage planétaire (13) étant connecté par le biais d'un arbre de porte-satellites (19) au pignon (20) de l'engrenage à pignons droits (14), qui s'engrène avec le pignon droit (21) qui est connecté au moyeu de roue (22) de la roue (7) ou qui est réalisé d'une seule pièce avec le moyeu de roue (22), la couronne dentée (23) de l'engrenage planétaire (13) étant disposée de manière fixée au boîtier, et le support sur palier de la prise de force (25) du dispositif d'entraînement (11) étant formé par le palier de roue de la roue (7), **caractérisé en ce qu'**un boîtier (24, 26) du dispositif d'entraînement (11) est connecté directement à un bras oscillant longitudinal (2) d'un essieu à traverse déformable en torsion (1).

2. Dispositif d'entraînement (11) pour l'entraînement d'une roue (7) pour un véhicule pouvant être entraîné électriquement selon la revendication 1, **caractérisé en ce que** le rotor (15) de la machine électrique (12) est réalisé d'une seule pièce avec l'arbre de roue solaire et/ou **en ce que** l'arbre de porte-satellites (19) est réalisé d'une seule pièce avec le pignon (20).

3. Dispositif d'entraînement (11) pour l'entraînement d'une roue (7) pour un véhicule pouvant être entraîné électriquement selon la revendication 1 ou 2, **caractérisé en ce que** l'engrenage planétaire (13) et l'engrenage à pignons droits (14) sont disposés, considéré axialement, du côté de la machine électrique (12) tourné vers la roue (7).

4. Dispositif d'entraînement (11) pour l'entraînement d'une roue (7) pour un véhicule pouvant être entraîné électriquement selon la revendication 1 ou 2, **caractérisé en ce que** l'engrenage planétaire (13) est disposé au niveau du côté de la machine électrique (12) opposé à la roue (7) et **en ce que** l'engrenage à pignons droits (14) est disposé du côté de la machine électrique (12) tourné vers la roue (7), la machine électrique (12) étant réalisée sous forme de rotor interne avec un rotor (15) réalisé en tant qu'arbre creux et l'arbre de porte-satellites (19) de l'engrenage planétaire (13) étant guidé à travers la cavité du rotor (15) de la machine électrique (12) vers le pignon (20) de l'engrenage à pignons droits (14).

5. Dispositif d'entraînement (11) pour l'entraînement d'une roue (7) pour un véhicule pouvant être entraîné électriquement selon l'une quelconque des revendications précédentes, **caractérisé en ce que** le boîtier (24, 26) est vissé au bras oscillant longitudinal, est intégré dans le bras oscillant longitudinal (2) en tant que composant soudé en plusieurs parties ou est réalisé d'une seule pièce avec le bras oscillant longitudinal (2).

6. Dispositif d'entraînement (11) pour l'entraînement d'une roue (7) pour un véhicule pouvant être entraîné électriquement selon l'une quelconque des revendications précédentes, **caractérisé en ce que** la liaison de l'étrier de frein dans le cas d'un frein à disques et/ou de l'amortisseur (9) et/ou du ressort (10) est intégrée dans un boîtier (24, 26) du dispositif d'entraînement (11).

7. Dispositif d'entraînement (11) pour l'entraînement d'une roue (7) pour un véhicule pouvant être entraîné électriquement selon la revendication 6, **caractérisé en ce que** les vis de liaison pour la fixation de l'étrier de frein constituent simultanément les vis de boîtier pour la fixation du dispositif d'entraînement (11) au bras oscillant longitudinal (2) de l'essieu à traverse déformable en torsion (1).

8. Dispositif d'entraînement (11) pour l'entraînement d'une roue pour un véhicule pouvant être entraîné électriquement selon au moins l'une quelconque des revendications précédentes, **caractérisé en ce que** le dispositif d'entraînement (1) est disposé au niveau d'un bras oscillant longitudinal d'un essieu, tel qu'un essieu à traverse déformable en torsion, un essieu à bras oscillant longitudinal, un essieu à bras oscillant central, un essieu à bras oscillant oblique.

9. Dispositif d'entraînement (11) pour l'entraînement d'une roue pour un véhicule pouvant être entraîné électriquement selon la revendication 8, **caractérisé en ce que** le dispositif d'entraînement (1) est disposé entre un point d'appui de la roue sur le bras oscillant longitudinal et un point d'appui du bras oscillant longitudinal sur la caisse du véhicule ou sur un châssis auxiliaire.

10. Dispositif d'entraînement (11) pour l'entraînement d'une roue pour un véhicule pouvant être entraîné électriquement selon au moins l'une quelconque des revendications précédentes, **caractérisé en ce que** le rapport entre la vitesse de rotation de l'arbre d'entraînement et la vitesse de rotation de l'arbre de prise de force de la transmission est supérieur à 10, de préférence est compris entre 13 et 18 et notamment est de 16.

11. Dispositif d'entraînement (11) pour l'entraînement d'une roue pour un véhicule pouvant être entraîné électriquement selon au moins l'une quelconque des revendications précédentes, **caractérisé en ce que** la machine électrique présente une vitesse de rotation maximale de plus de 15 000 tr/m, de préférence comprise entre 18 000 et 25 000 tr/m, en particulier de 21 000 tr/m.
